## Europäisches Patentamt
## European Patent Office
## Office européen des brevets

(11) Numéro de publication : **0 063 842**
**B1**

(12) # FASCICULE DE BREVET EUROPÉEN

(45) Date de publication du fascicule du brevet :
28.08.85

(51) Int. Cl.⁴ : **H 04 L 27/06**

(21) Numéro de dépôt : **82200454.5**

(22) Date de dépôt : **14.04.82**

(54) **Dispositif de récupération de porteuse pour une modulation d'amplitude et de phase à seize états et système de réception de données numériques comprenant un tel dispositif.**

(30) Priorité : **29.04.81 FR 8108549**

(43) Date de publication de la demande :
**03.11.82 Bulletin 82/44**

(45) Mention de la délivrance du brevet :
**28.08.85 Bulletin 85/35**

(84) Etats contractants désignés :.
**DE FR GB SE**

(56) Documents cités :
**FR-A- 2 462 826**
**US-A- 4 255 713**
**IEEE TRANSACTIONS ON COMMUNICATIONS volume COM-27, no. 12, décembre 1979 NEW YORK (US) I. HORIKAWA et al. "Design and performance of a 200 Mbit/S 16 QAM digital radio system" pages 1953-1958**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB SE**

(72) Inventeur : **Sari, Hikmet**
**Société Civile S.P.I.D. 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

## Description

La présente invention a trait à un système de réception de données numériques transmises selon le principe de la modulation d'amplitude et de phase à seize états dite MAQ 16 et concerne, plus précisément, un dispositif de récupération de porteuse pour un tel système.

La modulation dite MAQ 16 est obtenue en additionnant deux ondes porteuses en quadrature modulées en amplitude (niveaux 1 ou 3) et en phase (0 ou $\pi$). Le signal modulé est de la forme :

$$X(t) = (2a_k + 1) \sin (\omega t + b_k\pi) + (2c_k + 1) \cos (\omega t + d_k\pi)$$

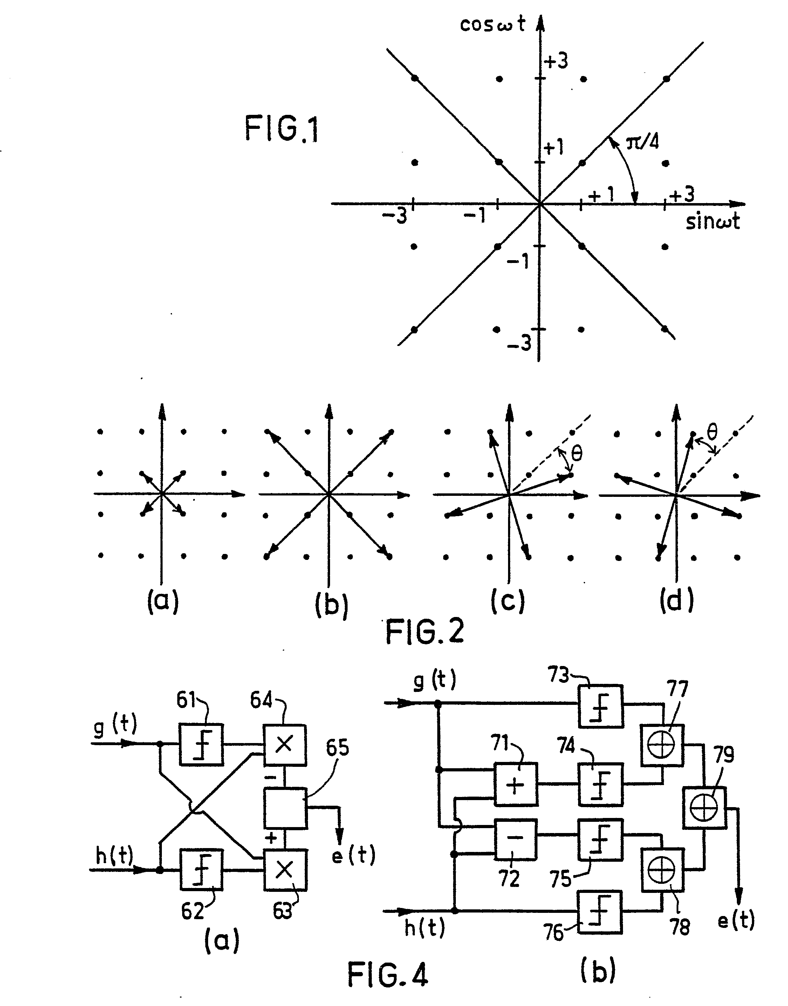

(avec $a_k$, $b_k$, $c_k$, $d_k$ égaux à 0 ou à 1, et t compris entre kT et (k + 1)T, T étant la durée d'un symbole). L'article « Design and performances of a 200 Mbits/s 16 QAM digital radio system » de I. Horikawa, T. Murase et Y. Saito, paru dans la revue IEEE Transactions on Communications, décembre 1979, volume COM-27, N° 12, pages 1953 à 1958, décrit un dispositif relativement simple de récupération de porteuse pour une modulation MAQ 16. Comme le montre la figure 1 de la présente demande, qui représente la constellation des points dans le cas d'une modulation MAQ 16, huit seulement parmi les seize états d'une telle modulation ont des phases égales à ± $\pi/4$ ou ± $3\pi/4$, c'est-à-dire les mêmes phases qu'une modulation à déplacement de phase à quatre états dite MDP4. Les auteurs de l'article cité préconisent donc de n'opérer la récupération de porteuse que lorsque le signal occupe l'un de ces huit états, et donc de récupérer la porteuse d'une modulation MAQ 16 à l'aide d'une boucle de récupération de porteuse pour modulation MDP4.

L'inconvénient de cette méthode apparaît cependant rapidement. En supposant que tous les états de la modulation MAQ 16 sont équiprobables, la boucle de récupération devrait, statistiquement, fonctionner pendant la moitié du temps. Mais, si le signal émis comporte une longue séquence dont les états ont des phases différentes de ± $\pi/4$ et de ± $3\pi/4$, la boucle ne fonctionne plus pendant cette séquence et risque de décrocher, c'est-à-dire de ne plus suivre l'évolution de la phase.

Le but de l'invention est donc de proposer un système de réception de données numériques à modulation MAQ 16 dans lequel le dispositif de récupération de porteuse fonctionne de façon ininterrompue et indépendante du signal émis.

L'invention concerne à cet effet un dispositif de récupération de porteuse qui comprend :

A) un ensemble de six voies en parallèle comprenant chacune en série un circuit de multiplication et un filtre passe-bande, cet ensemble prélevant le signal de sortie du canal de transmission pour délivrer trois paires de signaux (p(t), q(t)), (r(t), s(t)), (u(t), v(t)) ;

B) un circuit de sélection comprenant :

a) un circuit de détection d'amplitude et de signe, pour prélever en sortie des deux filtres $F_3$ et $F_4$ la paire de signaux (r(t), s(t)) et engendrer d'une part un signal numérique $\alpha$ égal à 1 ou à 0 selon que la valeur de $r(t)^2 + s(t)^2$ est respectivement comprise ou non entre deux valeurs de seuil déterminées et d'autre part un signal numérique $\beta$ égal aussi à 1 ou à 0 selon la valeur de l'expression (où $\oplus$ est l'opérateur OU exclusif) :

$$\text{(signe } r(t) \oplus \text{signe } s(t)) \oplus \text{signe } (|r(t)| - |s(t)|)$$

b) la connexion en cascade d'un circuit de commutation et du circuit de traitement de Costas, ladite connexion en cascade recevant lesdites trois paires de signaux p(t) à v(T) et les deux signaux numériques $\alpha$ et $\beta$ pour délivrer sélectivement, en réponse à l'une des trois paires de signaux, un signal d'erreur représentatif de l'erreur de phase sur le signal reçu, et ladite sélection étant effectuée par le circuit de commutation selon les valeurs de ces signaux numériques $\alpha$ et $\beta$ ;

C) le circuit de réglage de phase, comprenant un filtre de boucle et un oscillateur commandé en tension, le filtre recevant ledit signal d'erreur pour l'envoyer comme commande de tension vers l'oscillateur ;

D) un circuit de déphasage, qui prélève le signal de sortie de l'oscillateur pour l'envoyer sur une deuxième entrée des circuits de multiplication $M_1$ à $M_6$, cet envoi étant effectué avec un déphasage nul sur $M_1$, de $\Theta$ sur $M_3$ et de $2\Theta$ sur $M_5$, et avec un déphasage de $\pi/2$ sur $M_2$, de $\Theta + \pi/2$ sur $M_4$ et de $2\Theta + \pi/2$ sur $M_6$, $\Theta$ étant égal à Arctg 1/2.

Dans la structure ainsi proposée, on a considéré que les seize états d'un signal ayant subi une modulation MAQ 16 pouvaient être considérés comme résultant de l'union des états de quatre modulations MDP4 distinctes, dont les deux premières (figures 2a et 2b) correspondent à des états de mêmes phases mais peuvent être distinguées l'une de l'autre à l'aide d'une détection d'amplitude et dont les deux autres (figures 2c et 2d) correspondent à des états de même amplitude mais peuvent être distinguées l'une de l'autre à l'aide d'une détection de signe, en faisant intervenir les projections sur les axes cos $\omega t$ et sin $\omega t$.

Le brevet des Etats-Unis d'Amérique n° 4255713 déposé le 2 mars 1979 et délivré le 10 mars 1981 au nom de la société japonaise Nippon Electric décrit bien un dispositif de récupération de porteuse, mais destiné à un système de modulation différent de celui de la présente demande puisqu'il ne comprend que

2

deux états décalés de $\pi/4$ pour la détermination desquels seul un détecteur d'amplitude est nécessaire, ce détecteur commandant ou non selon la détection effectuée un déphaseur de $\pi/4$ dont l'entrée est le signal de fréquence intermédiaire. Dans le cas de la demande ici concernée, le détecteur d'amplitude n'agit pas seul mais au contraire en association avec un détecteur de signe pour commander un circuit de sélection en bande de base.

D'autres particularités et avantages de l'invention apparaîtront de façon plus précise dans la description qui suit et dans les dessins annexés donnés à titre d'exemples non limitatifs, dans lesquels :

la figure 1   représente la constellation des seize états d'un signal modulé selon une modulation MAQ 16 ;

les figures 2a à 2d   illustrent la décomposition d'une modulation MAQ 16 en quatre modulations MDP4 ;

la figure 3   montre un exemple de réalisation du dispositif de récupération de porteuse selon l'invention ; et

la figure 4   représente deux exemples de réalisation du circuit de traitement de Costas prévu dans le dispositif de la figure 3.

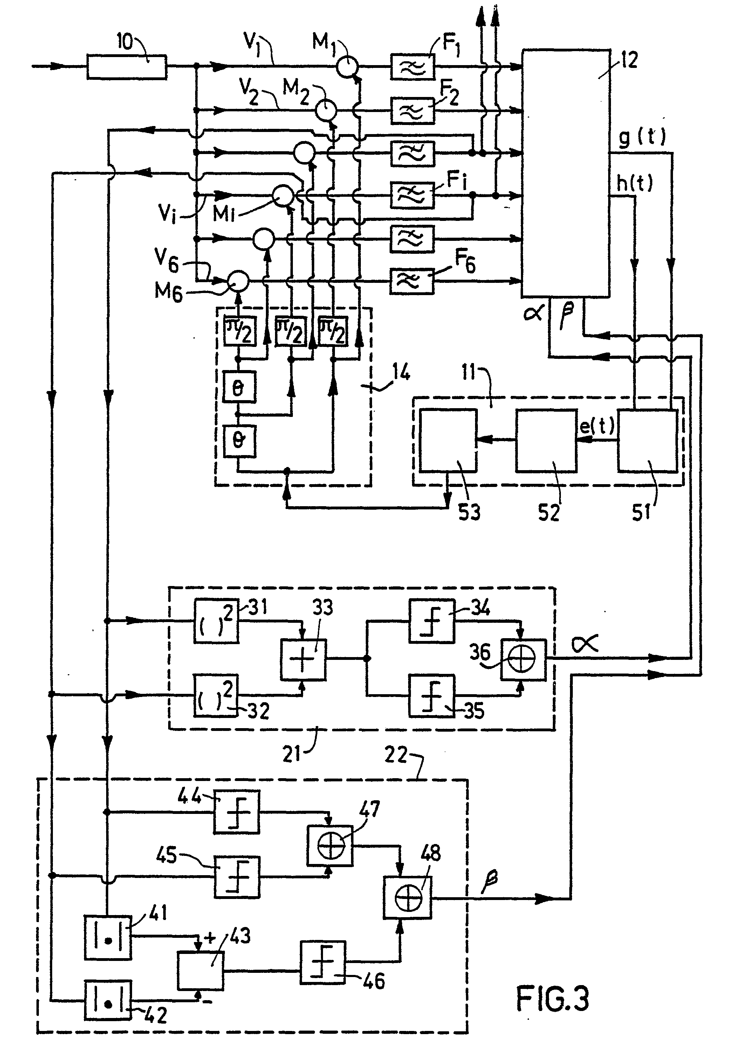

Le dispositif de récupération de porteuse conforme à l'invention comprend successivement, dans l'exemple de réalisation décrit en référence à la figure 3, un ensemble de six voies $V_1$ à $V_6$ en parallèle placées en sortie d'un canal de transmission 10 et fournissant à une boucle de réglage de phase 11 une des trois paires de signaux de sortie de ces voies, selon la valeur de deux coefficients fournis à un circuit de commutation 12 par un circuit de détection d'amplitude et de signe, un circuit de déphasage 14 permettant de fournir de façon rétroactive aux six voies $V_1$ à $V_6$ le signal de correction délivré par la boucle 11.

Les six voies $V_1$ à $V_6$ comprennent chacune en série un circuit de multiplication ($M_1$ à $M_6$) et un filtre passe-bas ($F_1$ à $F_6$). Chaque première entrée des circuits de multiplication $M_1$ à $M_6$ reçoit le signal de sortie du canal de transmission 10, et chaque deuxième entrée de ces circuits reçoit un des signaux délivrés par le circuit de déphasage 14 décrit en détail plus loin. En sortie des filtres $F_1$ à $F_6$ sont respectivement disponibles des signaux p(t), q(t), r(t), s(t), u(t) et v(t). Le circuit de commutation 12 transmet à la boucle de réglage de phase 11 une paire de signaux g(t), h(t) qui est égale à l'une des trois paires de signaux (p(t), q(t)), (r(t), s(t)) ou (u(t), v(t)). Le choix de celle des paires qui est transmise est imposé au circuit de commutation 12 par les valeurs des deux signaux numériques $\alpha$ et $\beta$ fournis au circuit 12 par le circuit de détection d'amplitude et de signe. Ce dernier prélève en effet les signaux r(t) et s(t) présents en sortie des deux filtres passe-bas $F_3$ et $F_4$ et effectue sur eux des tests d'amplitude et de signe, selon le processus décrit ci-dessous.

Le circuit de détection d'amplitude et de signe comprend d'abord un circuit de détection d'amplitude 21, composé de deux élévateurs au carré 31 et 32, d'un additionneur 33, de deux comparateurs 34 et 35 et d'une porte OU-exclusif 36. Les seuils des comparateurs 34 et 35 sont égaux à 3/2 et 7/2 respectivement (dans le cas où les niveaux de la modulation MAQ 16 sont 1, 3, -1 et -3), et le signal numérique $\alpha$ de sortie de la porte 36 prend la valeur 1 si la valeur de $r(t)^2 + s(t)^2$ est comprise entre 3/2 et 7/2 ou reste à la valeur 0 dans le cas contraire. Le circuit de détection d'amplitude et de signe comprend également un circuit de détection de signe 22, composé d'un circuit (41, 42, 43) de soustraction des valeurs absolues de r(t) et s(t), de trois comparateurs 44, 45 et 46 (de comparaison à zéro), et de deux portes OU-exclusif 47 et 48. Le signal numérique $\beta$ de sortie de la porte 48 prend la valeur 0 ou 1 selon le résultat logique du test effectué dans le circuit 13 et correspondant à l'expression :

$$\beta = [\text{signe } (r(t)) \oplus \text{signe } (s(t))] \oplus \text{signe } [|r(t)| - |s(t)|]$$

dans laquelle $\oplus$ désigne l'opérateur OU-exclusif et dans laquelle la fonction signe (x) est par exemple égale à 1 si x est positif et à 0 si x est négatif. Ces circuits 21 et 22 permettent donc de connaître $\alpha$ et $\beta$, et, par là, de connaître la nature du signal reçu : si $\alpha = 0$, le signal se trouve dans l'un des états des deux modulations MDP4 des figures 2a et 2b, tandis que, si $\alpha = 1$, ce signal se trouve dans l'un des états de la modulation MDP4 de la figure 2d si $\beta = 0$ ou dans l'un des états de la modulation MDP4 de la figure 2c si $\beta = 1$. Le circuit de commutation 12 peut alors assurer le transfert de la paire de signaux selon la loi suivante :

(a) $\alpha = 0$ : g(t), h(t) = r(t), s(t).
(b) $\alpha = 1$ et $\beta = 0$ : g(t), h(t) = u(t), v(t).
(c) $\alpha = 1$ et $\beta = 1$ : g(t), h(t) = p(t), q(t);

six circuits à retard individuels $R_1$ à $R_6$ étant prévus sur les dix entrées p(t), q(t), r(t), s(t), u(t), v(t) de ce circuit 12, ou incorporés à lui, pour compenser le temps de calcul des deux signaux numériques $\alpha$ et $\beta$ dans les deux circuits 21 et 22.

Sur la paire de signaux qui lui est transmise après commutation appropriée du circuit 12, la boucle de verrouillage de phase 11 effectue un traitement de Costas dans le circuit 51. Sur la figure 4a, ce circuit de traitement de Costas 51, de type analogique, comprend deux comparateurs à zéro 61 et 62, deux circuits de multiplication 63 et 64 et un circuit de soustraction 65. Le signal d'erreur e(t) délivré par le circuit 51 de

3

traitement de Costas est alors envoyé, par l'intermédiaire d'un filtre de boucle 52, vers un oscillateur 53 commandé en tension. La sortie de l'oscillateur 53 constitue le signal de sortie de la boucle 11, qui est envoyé sur les deuxièmes entrées des circuits de multiplication $M_1$ à $M_6$, directement pour le circuit $M_1$ et par l'intermédiaire du circuit à déphasage 14 pour les circuits $M_2$ et $M_6$. Ce circuit 14 impose un déphasage de $\pi/2$ au signal envoyé sur $M_2$, de $\theta$ = Arctg 1/2 au signal envoyé sur $M_3$, de $\pi/2 + \theta$ au signal envoyé sur $M_4$, de $2\theta$ au signal envoyé sur $M_5$, et de $\pi/2 + 2\theta$ au signal envoyé sur $M_6$. Enfin, les signaux de sortie r(t) et s(t) des voies $V_3$ et $V_4$, qui constituent ici les signaux démodulés en phase et en quadrature, sont envoyés vers un circuit de décision, non représenté.

Le principe de fonctionnement du dispositif dont on vient de décrire la structure est donc le suivant. Puisque les phases d'une modulation MAQ 16 sont les phases de trois modulations MDP4 décalées de l'angle $\theta$ (en réalité quatre, comme on l'a vu, mais deux d'entre elles ont les mêmes phases), on démodule le signal reçu sur trois paires de porteuses correspondant aux axes respectifs de ces trois modulations, dans les voies $(V_1, V_2)$, $(V_3, V_4)$, $(V_5, V_6)$ respectivement. Une détection d'amplitude et de signe permet alors de déterminer à laquelle des modulations MDP4 des figures 2a à 2d appartient le signal et quelle paire de signaux doit être injectée dans la boucle 11 par le circuit de commutation 12. Il y a donc, dans le dispositif selon l'invention, récupération de la porteuse d'une modulation MDP4 par une boucle de Costas, mais cette boucle est associée à des circuits logiques décidant de celle des trois paires de signaux de démodulation qui doit être prise en compte pour subir le traitement de Costas et permettre la détermination de l'erreur de phase sur le signal reçu et sa réintroduction à l'entrée du dispositif.

Bien entendu, la présente invention n'est pas limitée aux exemples de réalisation qui viennent d'être décrits et représentés, à partir desquels des variantes peuvent être proposées sans pour cela sortir du cadre de l'invention. On peut par exemple utiliser un circuit 51 de traitement de Costas non plus analogique, mais numérique, comprenant alors (voir la figure 4b) un additionneur 71, un soustracteur 72, quatre comparateurs à zéro 73 à 76 et trois portes OU-exclusif 77 à 79. Des exemples de circuits de traitement sont d'ailleurs connus et décrits en version analogique dans l'ouvrage « Phaselock techniques » de F. M. Gardner (John Wiley and Sons, 1979) et en version numérique dans l'article de Horikawa, Murase et Saito déjà cité.

On peut également, au lieu de placer le circuit 51 après le circuit de commutation 12, prévoir trois circuits 51a, 51b, 51c identiques (non représentés) placés avant ce circuit 12, en sortie des filtres $F_1$ et $F_2$, $F_3$ et $F_4$, $F_5$ et $F_6$ respectivement. Ces trois circuits 51a à 51c délivrent des signaux d'erreur $e_1(t)$, $e_2(t)$, $e_3(t)$. Dans le cas de la figure 4b, ou dans celui de la figure 4a après conversion analogique-numérique de e(t), le circuit 12 doit alors fournir au filtre de boucle 52 le signal d'erreur logique e(t) selon la loi logique de transfert suivante déjà précisée :

$$e = e_2 \cdot \bar{\alpha} + e_3 \cdot \alpha \cdot \bar{\beta} + e_1 \cdot \alpha \cdot \beta$$

ce qui est aisément réalisable avec deux inverseurs (pour fournir $\bar{\alpha}$ et $\bar{\beta}$ à partir de $\bar{\alpha}$ et $\bar{\beta}$), trois portes ET (la première recevant $e_2$ et $\bar{\alpha}$, la deuxième $e_3$, $\alpha$ et $\bar{\beta}$, et la troisième $e_1$, $\alpha$ et $\beta$) et une porte OU (recevant les sorties des trois portes ET et délivrant le signal d'erreur e(t)).

## Revendications

1. Dispositif de récupération de porteuse pour système de réception de données numériques transmises en modulation d'amplitude et de phase à seize états dite MAQ 16, ce dispositif comprenant notamment u circuit de détection d'amplitude des signaux de sortie du canal de transmission qui précède le système, un circuit de traitement (51) dit de Costas et un circuit de réglage de phase, ledit dispositif étant caractérisé en ce qu'il comprend :

A) un ensemble de six voies $(V_1)$ à $(V_6)$ en parallèle comprenant chacune en série un circuit de multiplication $(M_i)$ et un filtre passe-bande $(F_i)$, cet ensemble prélevant le signal de sortie du canal de transmission (10) pour délivrer trois paires de signaux (p(t), q(t)), (r(t), s(t)), (u(t), v(t)) ;

B) un circuit de sélection comprenant :

a) un circuit de détection d'amplitude et de signe, pour prélever en sortie des deux filtres $F_3$ et $F_4$ la paire de signaux (r(t), s(t)) et engendrer d'une part un signal numérique $\alpha$ égal à 1 ou à 0 selon que la valeur de $r(t)^2 + s(t)^2$ est respectivement comprise ou non entre deux valeurs de seuil déterminées et d'autre part un signal numérique $\beta$ égal aussi à 1 ou à 0 selon la valeur de l'expression (où $\oplus$ est l'opérateur OU exclusif) :

$$(\text{signe } r(t) \oplus \text{signe } s(t)) \oplus \text{signe } (|r(t)| - |s(t)|)$$

b) la connexion en cascade d'un circuit de commutation (12) et du circuit de traitement (51) de Costas, ladite connexion en cascade recevant lesdites trois paires de signaux p(t) à v(t) et les deux signaux numériques $\alpha$ et $\beta$ pour délivrer sélectivement, en réponse à l'une des trois paires de signaux, un signal d'erreur représentatif de l'erreur de phase sur le signal reçu, et ladite sélection étant effectuée par le circuit de commutation (12) selon les valeurs de ces signaux numériques $\alpha$ et $\beta$ ;

4

C) le circuit de réglage de phase, comprenant un filtre de boucle (52) et un oscillateur (53) commandé en tension, le filtre recevant ledit signal d'erreur pour l'envoyer comme commande de tension vers l'oscillateur ;

D) un circuit de déphasage (14), qui prélève le signal de sortie de l'oscillateur (53) pour l'envoyer sur une deuxième entrée des circuits de multiplication ($M_1$) à ($M_6$), cet envoi étant effectué avec un déphasage nul sur ($M_1$), de $\theta$ sur ($M_3$) et de $2\theta$ sur ($M_5$), et avec un déphasage de $\pi/2$ sur ($M_2$), de $\theta + \pi/2$ sur ($M_4$) et de $2\theta + \pi/2$ sur ($M_6$), $\theta$ étant égal à Arctg 1/2.

2. Dispositif selon la revendication 1, caractérisé en ce que le circuit de détection d'amplitude et de signe comprend :

a) le circuit de détection d'amplitude (21), composé de deux élévateurs au carré (31) et (32) recevant respectivement les signaux r(t) et s(t), d'un additionneur (33), de deux comparateurs à seuils (34) et (35) et d'une porte OU-exclusif (36), et en sortie duquel est disponible la valeur de $\alpha$ ;

b) un circuit de détection de signe (22), composé d'un circuit (41, 42, 43) de soustraction des valeurs absolues de r(t) et s(t), de trois comparateurs (44), (45) et (46) de comparaison à zéro, et de deux portes OU-exclusif (47) et (48), et en sortie duquel est disponible la valeur de $\beta$.

3. Dispositif selon l'une des revendications 1 et 2, caractérisé en ce que le circuit de traitement (51) est numérique.

4. Dispositif selon l'une des revendications 1 et 2, caractérisé en ce que le circuit de traitement (51) est analogique.

5. Système de réception de données numériques transmises en modulation d'amplitude et de phase à seize états dite MAQ 16 caractérisé en ce qu'il comprend un dispositif de récupération de porteuse selon l'une des revendications 1 à 4.

## Claims

1. A carrier recovery arrangement in a receiving system for digital data which are transmitted by means of sixteen-state amplitude and phase modulation (16 QAM), the system comprising an amplitude detection circuit for the output signal of the transmission channel preceding the system, a Costas-type signal processing circuit (51) and a phase-control circuit, said arrangement being characterized in that it comprises :

A) an assembly of six parallel paths ($V_1$) to ($V_6$) each including the series arrangement of a multiplying circuit ($M_i$) and a low-pass filter ($F_i$), said assembly receiving the output signal from the transmission channel (10) for producing three pairs of signals (p(t), q(t)) ; (r(t), s(t)) ; (u(t), v(t)) ;

B) a selection circuit comprising :

a) an amplitude-and-sign detection circuit receiving the pair of signals (r(t), s(t)) from the outputs of the two filters ($F_3$, $F_4$) for producing a digital signal $\alpha$, which is equal to 1 or 0 depending on whether or not the value of $r(t)^2 + s(t)^2$ is located between two predetermined threshold values, and for producing a digital signal $\beta$, which is also equal to 1 or to 0 in accordance with the value of the expression (where $\oplus$ is the Exclusive-OR-operator) :

$$(\text{sign } r(t) \oplus \text{sign } s(t)) \oplus \text{sign } (|r(t) - |s(t)||)$$

b) a cascade arrangement of a switching circuit (12) and the Costas-type signal processing circuit (51), said cascade arrangement receiving said three pairs of signals p(t) to v(t) and said two digital signals $\alpha$ and $\beta$ for selectively producing an error signal representative of the phase error of the received signal in response to one of said three pairs of signals, said selection being effected by said switching circuit (12) depending on the values of said digital signals $\alpha$ and $\beta$ ;

C) a phase control circuit comprising a loop filter (52) and a voltage-controlled oscillator (53), said loop filter receiving said error signal for applying it as a control voltage to said oscillator ; and

D) a phase-shifting circuit (14) receiving the output signal of said oscillator (53) for applying it to respective second inputs of said multiplying circuits ($M_1$) to ($M_6$), this signal application being effected with a phase shift zero for ($M_1$), $\theta$ for ($M_3$) and $2\theta$ for ($M_5$), and with a phase shift $\pi/2$ for ($M_2$), $\theta + \pi/2$ for ($M_4$), and $2\theta + \pi/2$ for ($M_6$), $\theta$ being equal to arctan (1/2).

2. An arrangement as claimed in Claim 1, characterized in that said amplitude-and-sign detection circuit comprises :

a) the amplitude detection circuit (21) composed of two squaring circuits (31) and (32) receiving said signals r(t) and s(t), respectively, an adder (33), two threshold comparators (34) and (35) and an Exclusive-OR-gate, at the output of which the value of $\alpha$ is available ; and

b) a sign detection circuit (22) composed of a substracting circuit (41, 42, 43) for the absolute values of said signals r(t) and s(t), three comparators (44), (45) and (46) for zero comparison and two Exclusive-OR-gates (47) and (48), at the output of which the value of $\beta$ is available.

3. An arrangement as claimed in one of the Claims 1 and 2, characterized in that the Costa-type signal processing circuit (51) is a digital circuit.

4. An arrangement as claimed in one of the Claims 1 and 2, characterized in that the Costas-type signal processing circuit (51) is an analog circuit.

5. A receiving system for digital data which are transmitted by means of sixteen-state amplitude and phase modulation (16 QAM), characterized in that it comprises a carrier recovery arrangement as claimed in any of the Claims 1 to 4.


**Patentansprüche**

1. Trägerrückgewinnungsanordnung in einem Empfanssystem für digitale Daten, die mit Hilfe der als 16 QAM bezeichneten Amplituden- und Phasenmodulation mit 16 Zuständen übertragen werden, wobei diese Anordnung insbesondere eine Amplitudendetektionsschaltung für Ausgangssignale des dem System vorgeschalteten Übertragungskanals, eine Verarbeitungsschaltung (51) von dem sogenannten « Costas »-Typ und eine Phasenregelschaltung aufweist, welche Anordnung dadurch gekennzeichnet ist, dass sie die folgenden Elemente aufweist :

A) ein Gefüge aus sechs parallelen Wegen $(V_1)$ bis $(V_6)$, die je eine Reihenschaltung aus einer Multiplizierschaltung $(M_i)$ und einem Bandpassfilter $(F_i)$ aufweisen, wobei dieses Gefüge das Ausgangssignal des Übertragungskanals (10) erhält zum Liefern von drei Signalpaaren (pT), q(t)) ; (r(t), s(t)) ; (u(t), v(t)) ;

B) eine Selektionsschaltung, die die folgenden Elemente enthält :

a) eine Amplituden- und Vorzeichendetektionsschaltung, die an dem Ausgang der zwei Filter $F_3$ und $F_4$ das Signalpaar (r(t), s(t)) erhält und einerseits ein digitales Signal $\alpha$ gleich 1 oder 0 erzeugt, je nachdem ob der Wert von $r(t)^2 + s(t)^2$ wohl bzw. nicht zwischen zwei vorbestimmten Schwellenwerten liegt, sowie andererseits ein digitales Signal $\beta$ erzeugt, das ebenfalls gleich 1 oder 0 ist, abhängig von dem Wert des Ausdrucks (wobei $\oplus$ ein Exklusiv-ODER-Operator ist und « sign » das Vorzeichen bezeichnet) :

$$(\text{sign } r(t) \oplus \text{sign } s(t)) \oplus \text{sign } (|r(t)| - |s(t)|)$$

b) die Reihenschaltung aus einem Umschalter (12) und einer Costas-Verarbeitungsschaltung (51), wobei die Reihenschaltung die drei Signalpaare p(t) bis v(t) und die zwei digitale Signale $\alpha$ und $\beta$ erhält um in Antwort auf eines der drei Signalpaare auf selektive Weise ein Fehlersignal zu liefern, das repräsentativ ist für den Phasenfehler des empfangenen Signals, und wobei die genannte Selektion entsprechend den Werten der digitalen Signale $\alpha$ und $\beta$ von dem Umschalter (12) durchgeführt wird ;

C) die Phasenregelschaltung, die ein Schleifenfilter (52) und einen spannungsgesteuerten Oszillator (53) enthält, wobei das Filter das genannte Fehlersignal erhält um dies als Spannungsbefehl dem Oszillator zuzuführen ;

D) einen Phasenschieber (15), der das Ausgangssignal des Oszillators (53) erhält um dies einem zweiten Eingang der Multiplizierschaltungen $(M_1)$ bis $(M_6)$ zuzuführen, wobei diese Zufuhr mit einer Phasenverschiebung gleich 0 für $(M_1)$, gleich $\theta$ für $(M_3)$ und gleich $2\theta$ für $(M_5)$ erfolgt, und mit einer Phasenverschiebung gleich $\pi/2$ für $(M_2)$, gleich $\theta + \pi/2$ für $(M_4)$ und $2\theta + \pi/2$ für $(M_6)$, wobei $\theta$ gleich arctg (1/2) ist.

2. Anordnung nach Anspruch 1, dadurch gekennzeichnet, dass die Amplituden- und Vorzeichendetektionsschaltung die folgenden Element aufweist :

a) die Amplitudendetektionsschaltung (21), die aus zwei Quadratierschaltungen (31) und (32) besteht, die die Signale r(t) bzw. s(t) erhalten, einer Addierschaltung (33), zwei Schwellenvergleichsschaltungen (34) und (35) und eine Exklusiv-oder-Tor (36), wobei an dem Ausgang der Wert { verfügbar ist ;

b) eine Vorzeichendetektionsschaltung (22), die aus einer Subtrahierschaltung (41, 42, 43) für die Absolutwerte von r(t) und s(t), drei Vergleichsschaltungen (44), (45) und (46) zum Nullvergleich und zwei Exklusiv-ODER-Tore (47) und (48) besteht, wobei an dem Ausgang der Wert $\beta$ verfügbar ist.

3. Schaltungsanordnung nach einem der Ansprüche 1 und 2, dadurch gekennzeichnet, dass die Verarbeitungsschaltung (51) digital ist.

4. Schaltungsanordnung nach einem der Ansprüche 1 und 2, dadurch gekennzeichnet, dass die Verarbeitungsschaltung (51) analog ist.

5. Empfangssystem für digitale Signale, die mit Hilfe der als 16 QAM bezeichneten Amplituden- und Phasenmodulation mit sechzehn Zuständen übertragen werden, dadurch gekennzeichnet, dass das Empfangssystem mit einer Trägerrückgewinnungsanordnung nach einem der Ansprüche 1 bis 4 versehen ist.

0 063 842

FIG.1

FIG.2

FIG.4

0 063 842

FIG.3